# EUROPÄISCHE PATENTSCHRIFT

(11) **EP 4 100 455 B1**
(45) Veröffentlichungstag und Bekanntmachung des Hinweises auf die Patenterteilung: **27.12.2023**
(21) Anmeldenummer: 21700688.1
(22) Anmeldetag: 11.01.2021
(51) Int. Cl.: C08G 18/76, C08G 18/48, C08G 18/30, C09J 175/08, C08G 18/10

(54) **LINEARES ISOCYANATGRUPPEN-HALTIGES POLYMER**
LINEAR ISOCYANATE GROUP-CONTAINING POLYMER
POLYMÈRE LINÉAIRE CONTENANT DES GROUPES ISOCYANATE

(30) Priorität: 03.02.2020 EP 20155193
(43) Veröffentlichungstag der Anmeldung: 14.12.2022
(73) Patentinhaber: Sika Technology AG, 6340 Baar (CH)
(72) Erfinder: REIMANN, Sven, 8046 Zürich (CH); JENNI, Melanie, 8957 Spreitenbach (CH)
(74) Vertreter: Sika Patent Attorneys
(86) Internationale Anmeldenummer: PCT/EP2021/050374
(87) Internationale Veröffentlichungsnummer: WO 2021/156017

(56) Entgegenhaltungen:
- EP-A1- 2 493 951

## Beschreibung

### Technisches Gebiet

Die Erfindung betrifft monomerarme Polymere für feuchtigkeitshärtende Polyurethan-Zusammensetzungen und ihre Anwendung als elastische Klebstoffe mit guter Haftung auf Kunststoff-Substraten.

### Stand der Technik

Polyurethan-Zusammensetzungen, welche durch Reaktion von Isocyanatgruppen mit Feuchtigkeit bzw. Wasser vernetzen und dabei zu Elastomeren aushärten, werden insbesondere als elastische Klebstoffe oder Dichtstoffe in der Bau- und Fertigungsindustrie eingesetzt, beispielsweise zur Verklebung von Bauteilen in der Montage oder zur Verfüllung von Fugen. Aufgrund ihrer Haftung und Elastizität können sie auf die Substrate einwirkende Kräfte, ausgelöst etwa durch Vibrationen oder Temperaturschwankungen, schonend dämpfen und überbrücken.

Solche Polyurethan-Zusammensetzungen enthalten als Bindemittel Isocyanatgruppen-haltige Polymere, welche durch Umsetzung von Polyolen mit monomeren Diisocyanaten hergestellt werden. Die so erhaltenen Polymere enthalten aufgrund von Kettenverlängerungsreaktionen einen Restgehalt an monomeren Diisocyanaten, typischerweise im Bereich von 1 bis 3 Gewichts-%. Monomere Diisocyanate sind potentiell gesundheitsschädlich. Zubereitungen enthaltend monomere Diisocyanate müssen insbesondere ab einer Konzentration von 0.1 Gewichts-% mit Gefahrensymbolen und Warnhinweisen auf dem Etikett und in den Datenblättern versehen sein und können in einigen Ländern nur unter Auflagen verkauft und eingesetzt werden. Es besteht deshalb ein Interesse an Polyurethan-Zusammensetzungen mit geringem Gehalt an Monomeren, insbesondere unter 0.1 Gewichts-%. Ein attraktiver Weg zu Isocyanatgruppen-haltigen Polymeren mit geringem Gehalt an monomeren Diisocyanaten besteht darin, das monomere Diisocyanat bei der Polymerherstellung im Überschuss einzusetzen und anschliessend ein Grossteil des nicht umgesetzten monomeren Diisocyanats mittels Destillation zu entfernen. Besonders einfach durchzuführen ist dieser Weg mit niedermolekularen und somit flüchtigen monomeren Diisocyanaten, wie beispielsweise Hexandiisocyanat.

Darauf basierende Polymere ergeben aber eine langsame Aushärtung und eine geringe mechanische Festigkeit in den Produkten.

Polymere basierend 4,4'-Diphenylmethandiisocyanat (4,4'-MDI) ermöglichen hohe Festigkeiten bei hoher Elastizität. Beim destillativen Entfernen eines Monomer-Überschusses sind sie aufgrund der geringen Flüchtigkeit von 4,4'-MDI aber wesentlich aufwändiger in der Herstellung.

Elastische Klebstoffe für das Verkleben von Kunststoff-Substraten werden in der Industrie zunehmend nachgefragt, beispielsweise für das Verkleben von Scheinwerfergehäusen oder Panormadächern an Fahrzeugen, organischem Glas bei Schiffen oder Zügen oder diversen Bauteilen an Caravans. Dabei soll der Klebstoff schnell und zuverlässig aushärten, bei hoher Festigkeit sehr elastisch sein und ohne aufwändige Vorbehandlung auf dem Kunststoff-Substrat eine hohe Haftkraft aufweisen, auch bei Belastung mit Hitze und Wasser. Klebstoffe basierend auf monomerarmen Polymeren zeigen aber insbesondere auch aufgrund der weitgehend fehlenden monomeren Diisocyanate Schwächen beim Haftungsaufbau zu Kunststoff-Substraten. EP2493951A1 offenbart ebenfalls lineare NCOgruppenhaltige Polymere für Hotmelts, welche einen niedrigen Monomergehalt aufweisen sollen, gute Haftung zu verschiedenen Oberflächen zeigen und Kunststoffsubstratoberflächen nicht angreifen. Die Prepolymere werden mit niedermolekularen Polyetherdiolen und fünffachem Isocyanat-Überschuss hergestellt, überschüssiges Isocyanat durch Dünnschichtverdampfung wird entfernt.

### Darstellung der Erfindung

Aufgabe der vorliegenden Erfindung ist es daher, ein Polymer mit geringem Gehalt an monomeren Diisocyanaten bereitzustellen, welches kennzeichnungsfreie elastische Klebstoffe mit zuverlässiger Aushärtung und hoher Festigkeit ermöglicht und deren Haftung auf Kunststoff-Substraten deutlich verbessert.

Diese Aufgabe wird mit einem linearen Polymer wie in Anspruch 1 beschrieben gelöst. Das Polymer hat einen NCO-Gehalt im Bereich von 0.3 bis 1.5 Gewichts-% und basiert auf aromatischen monomeren Diisocyanaten, insbesondere 4,4'-Diphenylmethandiisocyanat, und Polyether-Diolen mit einer OH-Zahl im Bereich von 5 bis 21 mg KOH/g. Das erfindungsgemässe Polymer ist linear und von hoher Kettenlänge bei geringem Gehalt an monomeren Diisocyanaten. Es ist bei Raumtemperatur flüssig, hat eine vergleichsweise niedrige Viskosität und ist unter Ausschluss von Feuchtigkeit hervorragend lagerstabil. Es ermöglicht elastische Klebstoffe mit attraktiver EHS Einstufung und überraschend guter Haftung auf Kunststoff-Substraten wie zum Beispiel PVC, PMMA oder Polycarbonat, auch bei Belastung mit Hitze und Wasser. Besonders überraschend ist dabei auch der Umstand, dass das erfindungsgemässe Polymer den Klebstoffen ausgezeichnete mechanische Eigenschaften, insbesondere eine hohe Festigkeit (Zugfestigkeit und Elastizitätsmodul), verleiht, was bei solch langkettigen linearen Polymeren nicht zu erwarten war. Im Vergleich zu Polymeren auf Basis von kürzerkettigen Polyether-Diolen bringt das erfindungsgemässe Polymer bei vergleichbaren mechanischen Eigenschaften eine signifikant bessere Haftung auf Kunststoff-Substraten. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein lineares Isocyanatgruppen-haltiges Polymer mit einen NCO-Gehalt im Bereich von 0.3 bis 1.5 Gewichts-% und einen Gehalt an monomeren Diisocyanaten von höchstens 0.5 Gewichts-%, dadurch gekennzeichnet, dass es erhalten wird aus der Umsetzung von mindestens einem monomeren aromatischen Diisocyanat und einem Polyether-Diol mit einer OH-Zahl im Bereich von 5 bis 21 mg KOH/g in einem NCO/OH-Verhältnis von mindestens 5/1 und nachfolgender Entfernung eines Grossteils des monomeren aromatischen Diisocyanats mittels eines geeigneten Trennverfahrens.

Als "monomeres Diisocyanat" wird eine organische Verbindung mit zwei Isocyanatgruppen, die durch einen zweiwertigen Kohlenwasserstoff-Rest mit 4 bis 15 C-Atomen getrennt sind, bezeichnet.

Als "aromatisch" wird eine Isocyanatgruppe bezeichnet, welche direkt an ein aromatisches C-Atom gebunden ist. Isocyanate mit ausschliesslich aromatischen Isocyanatgruppen werden entsprechend als "aromatische Isocyanate" bezeichnet. Als "aliphatisch" wird eine Isocyanatgruppe bezeichnet, welche direkt an ein aliphatisches oder cycloaliphatisches C-Atom gebunden ist. Isocyanate mit ausschliesslich aliphatischen Isocyanatgruppen werden entsprechend als "aliphatische Isocyanate" bezeichnet.

Als "monomeres aromatisches Diisocyanat" wird ein monomeres Diisocyanat mit aromatischen Isocyanatgruppen bezeichnet.

Als "NCO-Gehalt" wird der Gehalt an Isocyanatgruppen in Gewichts-% bezeichnet. Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt. Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten, bevorzugt bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Kunststoff" wird ein organisches Material auf der Basis von Makromolekülen bezeichnet, auch "Plastik" genannt.

Als "Raumtemperatur" wird eine Temperatur von 23°C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Das erfindungsgemässe Isocyanatgruppen-haltige Polymer kann auch als Prepolymer bezeichnet werden.

Bevorzugt weist das erfindungsgemässe Polymer einen NCO-Gehalt im Bereich von 0.5 bis 1.3 Gewichts-% auf, insbesondere 0.7 bis 1.1 Gewichts-%.

Besonders bevorzugt weist das Polymer einen NCO-Gehalt im Bereich von 0.8 bis 1.1 Gewichts-%, insbesondere 0.9 bis 1.1 Gewichts-%, auf. Ein solches Polymer ermöglicht besonders lagerstabile Zusammensetzungen mit sehr guter Haftung auf Kunststoff-Substraten.

Bevorzugt weist das erfindungsgemässe Polymer einen Gehalt an monomeren Diisocyanaten von höchstens 0.3 Gewichts-%, insbesondere höchstens 0.2 Gewichts-%, auf. Ein solches Polymer ist besonders geeignet für die Herstellung von feuchtigkeitshärtenden Polyurethan-Zusammensetzungen, welche einen Gehalt an monomeren Diisocyanaten von weniger als 0.1 Gewichts-% aufweisen; diese sind auch ohne besondere Schutzvorkehrungen sicher in der Handhabung und können damit in vielen Ländern ohne Gefahrenkennzeichnung verkauft werden.

Als monomeres aromatisches Diisocyanat geeignet ist insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), 2,3,5,6-Tetramethyl-1,4-diisocyanatobenzol, Naphthalin-1,5-diisocyanat (NDI) oder 3,3'-Dimethyl-4,4'-diisocyanatodiphenyl (TODI).

Davon bevorzugt ist 4,4'-Diphenylmethandiisocyanat oder 2,4-Toluylendiisocyanat oder 1,4-Phenylendiisocyanat.

Besonders bevorzugt als monomeres aromatisches Diisocyanat ist 4,4'-Diphenylmethandiisocyanat (4,4'-MDI). Dabei ist das 4,4'-MDI von einer Qualität, welche nur geringe Anteile an 2,4'- und/oder 2,2'-Diphenylmethandiisocyanat enthält und bei Raumtemperatur fest ist. Es ermöglicht Klebstoffe mit besonders schneller Aushärtung und besonders hoher Festigkeit bei hoher Dehnbarkeit und Elastizität. Bevorzugt ist das 4,4'-MDI destilliert und weist eine Reinheit von mindestens 95 %, insbesondere mindestens 97.5 %, auf.

Ein kommerziell erhältliches 4,4'-Diphenylmethandiisocyanat dieser Qualität ist beispielsweise Desmodur^{®} 44 MC (von Covestro) oder Lupranat^{®} MRS oder ME (von BASF) oder Suprasec^{®} 1400 (von Huntsman).

Das Polyether-Diol enthält bevorzugt Repetiereinheiten ausgewählt aus der Gruppe bestehend aus 1,2-Ethylenoxy, 1,2-Propylenoxy, 1,3-Propylenoxy, 1,2-Butylenoxy und 1,4-Butylenoxy. Bevorzugt sind 1,2-Propylenoxy-Gruppen, gegebenenfalls mit einem gewissen Anteil an 1,2-Ethylenoxy-Gruppen. Insbesondere enthält das Polyether-Diol 80 bis 100 Gewichts-% 1,2-Propylenoxy-Gruppen und 0 bis 20 Gewichts-% 1,2-Ethylenoxy-Gruppen.

Für den Fall, dass das Polyether-Diol 1,2-Ethylenoxy-Gruppen enthält, bilden die 1,2-Propylenoxy-Gruppen und die 1,2-Ethylenoxy-Gruppen bevorzugt jeweils homogene Blöcke und die Poly(1,2-ethylenoxy)-Blöcke befinden sich an den Kettenenden.

Das Polyether-Diol weist bevorzugt eine OH-Zahl im Bereich von 6 bis 19 mg KOH/g, insbesondere 9 bis 14 mg KOH/g, am meisten bevorzugt 12 bis 14 mg KOH/g, auf.

Das Polyether- Diol weist bevorzugt ein mittleres Molekulargewicht Mₙ im Bereich von 5'500 bis 20'000 g/mol, besonders bevorzugt 6'000 bis 18'000 g/mol, insbesondere 8'000 bis 12'000 g/mol, am meisten bevorzugt 8'000 bis 9'000 g/mol, auf.

Das Polyether-Diol hat bevorzugt eine mittlere OH-Funktionalität von mindestens 1.8, insbesondere mindestens 1.9. Kommerzielle Polyether-Diole enthalten herstellungsbedingt einen gewissen Gehalt an Monolen, wodurch ihre mittlere OH-Funktionalität typischerweise leicht unterhalb von 2 liegt.

Das Polyether-Diol hat bevorzugt einen Ungesättigtheitsgrad von weniger als 0.02 mEq/g, insbesondere weniger als 0.01 mEq/g, gemessen nach ASTM D-2849-69. Polyether-Diole mit einem Ungesättigtheitsgrad von weniger als 0.01 mEq/g sind insbesondere hergestellt mit Hilfe von sogenannten Double Metal Cyanide Complex-Katalysatoren (DMC-Katalysatoren).

Das Polyether-Diol weist besonders bevorzugt eine OH-Zahl im Bereich von 6 bis 19 mg KOH/g, insbesondere 9 bis 14 mg KOH/g, am meisten bevorzugt 12 bis 14 mg KOH/g, und eine mittlere OH-Funktionalität von mindestens 1.9 auf.

Geeignete Polyether-Diole sind kommerziell erhältlich, beispielsweise als Acclaim^{®} Polyol 8200 N, Acclaim^{®} Polyol 12200 N, Acclaim^{®} Polyol 18200 N (alle von Covestro), oder Preminol^{®} S 4013 F (von Asahi Glass).

Bevorzugt weist das erfindungsgemässe Polymer ein mittleres Molekulargewicht Mₙ im Bereich von 6'000 bis 40'000 g/mol auf, bestimmt mittels Gelpermeationschromatographie (GPC) gegen Polystyrol als Standard mit Tetrahydrofuran als mobile Phase und Brechungsindex-Detektor.

Besonders bevorzugt liegt das mittlere Molekulargewicht Mₙ im Bereich von 8'000 bis 30'000 g/mol, insbesondere 8'000 bis 15'000 g/mol.

Das erfindungsgemässe Polymer wird erhalten aus der Umsetzung von mindestens einem monomeren aromatischen Diisocyanat und dem Polyether-Diol in einem NCO/OH-Verhältnis von mindestens 5/1.

Bevorzugt liegt das NCO/OH-Verhältnis im Bereich von 5/1 bis 20/1, besonders bevorzugt im Bereich von 6/1 bis 15/1, insbesondere im Bereich von 7/1 bis 13/1. Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Nach der Umsetzung wird das im Reaktionsgemisch verbleibende monomere Diisocyanat bis auf den beschriebenen Restgehalt mittels eines geeigneten Trennverfahrens entfernt.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere aromatische Diisocyanat in einem Kurzwegverdampfer bei einer Manteltemperatur im Bereich von 120 bis 200°C und einem Druck von 0.001 bis 0.5 mbar entfernt wird.

Im Fall des als monomeres aromatisches Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird bei einer Manteltemperatur im Bereich von 160 bis 200°C bei 0.001 bis 0.5 mbar gefahren und das entfernte Monomer bei einer Temperatur im Bereich von 40 bis 60°C kondensiert.

Bevorzugt erfolgt die Umsetzung des monomeren aromatischen Diisocyanats mit dem Polyether-Diol und das anschliessende Entfernen des Grossteils des im Reaktionsgemisch verbliebenen monomeren Diisocyanats ohne den Einsatz von Lösemitteln bzw. Schleppmitteln.

Bevorzugt wird das nach der Umsetzung entfernte aromatische monomere Diisocyanat anschliessend wiederverwendet, d.h. erneut für die Herstellung von Isocyanatgruppen-haltigem Polymer eingesetzt.

Ganz besonders bevorzugt weist das Isocyanatgruppen-haltige Polymer einen NCO-Gehalt im Bereich von 0.5 bis 1.3 Gewichts-% und einen Gehalt an monomeren Diisocyanaten von höchstens 0.3 Gewichts-% auf. Ein solches Polymer ist besonders geeignet für elastische Klebstoffe mit guter Haftung auf Kunststoff-Substraten, guten mechanischen Eigenschaften und guter EHS Einstufung.

Das erfindungsgemässe Polymer ist bei Raumtemperatur flüssig und weist eine vergleichsweise niedrige Viskosität auf. Bevorzugt hat es eine Viskosität bei 20 °C von höchstens 80 Pa s, insbesondere höchstens 70 Pa s, besonders bevorzugt höchstens 60 Pa s. Dabei wird die Viskosität bestimmt mit einem Kegel-Platten-Viskosimeter bei einer Scherrate von 10 s⁻¹.

Bei der Umsetzung reagieren die OH-Gruppen des Polyether-Diols mit den Isocyanatgruppen des monomeren aromatischen Diisocyanats. Dabei kommt es auch zu sogenannten Kettenverlängerungsreaktionen, indem OH-Gruppen und/oder Isocyanatgruppen von Umsetzungsprodukten zwischen Diol und monomerem Diisocyanat reagieren. Je höher das NCO/OH-Verhältnis gewählt wird, desto weniger Kettenverlängerungsreaktionen finden statt, und desto niedriger ist die Polydispersität und somit auch die Viskosität des erhaltenen Polymers. Ein Mass für die Kettenverlängerungsreaktion ist das mittlere Molekulargewicht des Polymers bzw. die Breite und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren aromatischen Diisocyanat.

Bevorzugt enthält das erfindungsgemässe Polymer nur einen geringen Gehalt an kettenverlängerten Anteilen. Bevorzugt beträgt der NCO-Gehalt im erfindungsgemässen Polymer mindestens 90%, insbesondere mindestens 95%, des theoretischen NCO-Gehalts, welcher aus der Addition von einem mol monomerem Diisocyanat pro mol OH-Gruppen des Polyether-Diols berechnet wird.

Das erfindungsgemässe Polymer ist niedrigviskos, enthält einen geringen Gehalt an monomeren Diisocyanaten und ist unter Ausschluss von Feuchtigkeit sehr lagerstabil. Es ist besonders geeignet zur Herstellung von elastischen Klebstoffen mit schneller Aushärtung, hoher Festigkeit, hoher Dehnbarkeit und besonders guter Haftung auf Kunststoff-Substraten.

Ein weiterer Gegenstand der Erfindung ist eine feuchtigkeitshärtende Polyurethan-Zusammensetzung mit einen Gehalt an monomeren Diisocyanaten von weniger als 0.1 Gewichts-% enthaltend das erfindungsgemässe lineare Isocyanatgruppen-haltige Polymer.

Bevorzugt weist die feuchtigkeitshärtende Polyurethan-Zusammensetzung einen Gehalt an erfindungsgemässem Polymer bezogen auf die gesamte Zusammensetzung im Bereich von 5 bis 80 Gewichts-%, insbesondere 10 bis 70 Gewichts-%, besonders bevorzugt 20 bis 60 Gewichts-%, auf.

Zusätzlich zum erfindungsgemässen Polymer kann die feuchtigkeitshärtende Polyurethan-Zusammensetzung mindestens ein zusätzliches, nicht dem erfindungsgemässen Polymer entsprechendes Isocyanatgruppen-haltiges Polymer enthalten. Als zusätzliches Isocyanatgruppen-haltiges Polymer geeignet sind konventionell hergestellte Polymere oder andere Monomer-befreite Polymere. Geeignet sind weitere aromatische Isocyanatgruppen-haltige Polymere, aber auch aliphatische Isocyanatgruppen-haltige Polymere.

Geeignete weitere Isocyanatgruppen-haltige Polymere werden erhaltend aus der Umsetzung von mindestens einem Polyol mit einer überstöchiometrischen Menge von mindestens einem Diisocyanat. Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Das NCO/OH-Verhältnis liegt bevorzugt im Bereich von 1.3/1 bis 10/1. Das nach der Umsetzung der OH-Gruppen im Reaktionsgemisch verbleibende monomere Diisocyanat kann entfernt werden, insbesondere mittels Destillation.

Für den Fall, dass monomeres Diisocyanat aus dem Polymer entfernt wird, liegt das NCO/OH-Verhältnis bei der Umsetzung bevorzugt im Bereich von 3/1 bis 10/1 und das erhaltene Isocyanatgruppen-haltige Polymer enthält nach der Destillation bevorzugt höchstens 0.5 Gewichts-%, besonders bevorzugt höchstens 0.3 Gewichts-%, monomeres Diisocyanat.

Für den Fall, dass monomeres Diisocyanat nicht aus dem Polymer entfernt wird, liegt das NCO/OH-Verhältnis bei der Umsetzung bevorzugt im Bereich von 1.3/1 bis 2.5/1. Ein solches Polymer enthält insbesondere höchstens 3.5 Gewichts-%, bevorzugt höchstens 2 Gewichts-%, monomeres Diisocyanat.

Als monomeres Diisocyanat bevorzugt sind die bereits genannten aromatischen Diisocyanate, sowie aliphatische oder cycloaliphatische Diisocyanate, insbesondere MDI, TDI, 1,6-Hexandiisocyanat (HDI), Isophorondiisocyanat (IPDI) oder Perhydro-2,4'- oder -4,4'-diphenylmethandiisocyanat (HMDI), oder Gemische davon.

Besonders bevorzugt ist 4,4'-MDI, TDI oder IPDI.

Geeignete Polyole sind handelsübliche Polyole oder Mischungen davon, insbesondere
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).
   Bevorzugte Polyetherpolyole sind Polyoxypropylendiole oder Polyoxypropylentriole, oder sogenannte Ethylenoxid-terminierte (EO-capped bzw. EO-tipped) Polyoxypropylendiole oder -triole. Letztere werden insbesondere dadurch erhalten, dass Polyoxypropylendiole oder -triole nach Abschluss der Polypropoxylierungsreaktion mit Ethylenoxid weiter alkoxyliert werden und dadurch primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Bevorzugt sind Polyesterdiole aus der Umsetzung von zweiwertigen Alkoholen wie insbesondere 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie insbesondere Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure, 1,2-Cyclohexandicarbonsäure, 1,3-Cyclohexandicarbonsäure oder 1,4-Cyclohexandicarbonsäure oder Mischungen der vorgenannten Säuren, oder Polyesterpolyole aus Lactonen wie insbesondere ε-Caprolacton. Besonders bevorzugt sind Polyesterpolyole aus Adipinsäure oder Sebacinsäure oder Dodecandicarbonsäure und Hexandiol oder Neopentylglykol.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei OH-Gruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- oder Polymethacrylatpolyole.
- Polyhydroxyfunktionelle Fette oder Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen oder Isopren, insbesondere polyhydroxyfunktionelle Acrylonitril/ Butadien-Copolymere, wie sie insbesondere aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; oder hydrierte polyhydroxyfunktionelle Polymere oder Copolymere von Dienen.

Geeignet sind insbesondere auch Mischungen von Polyolen.

Bevorzugt sind Polyole mit einer OH-Zahl von mindestens 22 mg KOH/g und/oder Polyether-Triole.

Bei der Herstellung eines Isocyanatgruppen-haltigen Polymers können auch Anteile von zwei- oder mehrfunktionellen Alkoholen mitverwendet werden, insbesondere 1,2-Ethandiol, 1,2-Propandiol, 1,3-Propandiol, 2-Methyl-1,3-propandiol, 1,2-Butandiol, 1,3-Butandiol, 1,4-Butandiol, 1,3-Pentandiol, 1,5-Pentandiol, 3-Methyl-1,5-pentandiol, Neopentylglykol, Dibromneopentylglykol, 1,2-Hexandiol, 1,6-Hexandiol, 1,7-Heptandiol, 1,2-Octandiol, 1,8-Octandiol, 2-Ethyl-1,3-hexandiol, Diethylenglykol, Triethylenglykol, Dipropylenglykol, Tripropylenglykol, 1,3- oder 1,4-Cyclohexandimethanol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythritol, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

Bevorzugt weist die feuchtigkeitshärtende Polyurethan-Zusammensetzung einen Gehalt an erfindungsgemässem Polymer bezogen auf die gesamte Menge an Isocyanatgruppen-haltigen Polymeren in der Zusammensetzung von mindestens 25 Gewichts-%, bevorzugt mindestens 40 Gewichts-%, insbesondere mindestens 60 Gewichts-%, auf.

Bevorzugt enthält die feuchtigkeitshärtende Polyurethan-Zusammensetzung zusätzlich mindestens einen verzweigten Isocyanatgruppen-haltigen Bestandteil mit einer mittleren NCO-Funktionalität von mehr als 2. Zusammen mit dem erfindungsgemässen Polymer wird damit eine gute mechanische Festigkeit und thermische Beständigkeit bei guter Haftung auf Kunststoff-Substraten ermöglicht.

Bevorzugt ist der verzweigte Isocyanatgruppen-haltige Bestandteil ausgewählt aus der Gruppe bestehend aus oligomeren Diisocyanaten und verzweigten Isocyanatgruppen-haltigen Polymeren.

Bevorzugt hat der verzweigte Isocyanatgruppen-haltige Bestandteil eine mittlere NCO-Funktionalität im Bereich von 2.2 bis 4, insbesondere 2.3 bis 3.5.

Bevorzugte oligomere Diisocyanate sind HDI-Biurete wie Desmodur^{®} N 100 oder N 3200 (von Covestro), Tolonate^{®} HDB oder HDB-LV (von Vencorex) oder Duranate^{®} 24A-100 (von Asahi Kasei); HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane); HDI-Uretdione wie Desmodur^{®} N 3400 (von Covestro); HDI-Iminooxadiazindione wie Desmodur^{®} XP 2410 (von Covestro); HDI-Allophanate wie Desmodur^{®} VP LS 2102 (von Covestro); IPDI-Isocyanurate wie beispielsweise in Lösung als Desmodur^{®} Z 4470 (von Covestro) oder in fester Form als Vestanat^{®} T1890/ 100 (von Evonik); TDI-Oligomere wie Desmodur^{®} IL (von Covestro); oder gemischte Isocyanurate auf Basis TDI/HDI wie Desmodur^{®} HL (von Covestro), wobei "HDI" für 1,6-Hexandiisocyanat, "IPDI" für Isophorondiisocyanat und "TDI" für 2,4-Toluylendiisocyanat oder Gemische davon mit 2,6-Toluylendiisocyanat steht.

Bevorzugt sind verzweigte Isocyanatgruppen-haltige Polymere mit einer mittleren NCO-Funktionalität im Bereich von 2.2 bis 3, insbesondere 2.3 bis 3.

Ein besonders bevorzugtes verzweigtes Isocyanatgruppen-haltiges Polymer hat einen NCO-Gehalt im Bereich von 1 bis 2.5 Gewichts-% und einen Gehalt an monomeren Diisocyanaten von höchstens 0.3 Gewichts-% und wird erhalten aus der Umsetzung von 4,4'-MDI oder IPDI, insbesondere 4,4'-MDI, mit einem gegebenenfalls Ethylenoxid-terminierten Polyoxypropylen-Triol mit einer mittleren OH-Funktionalität im Bereich von 2.2 bis 3 und einer OH-Zahl im Bereich von 20 bis 60 mg KOH/g, insbesondere im Bereich von 22 bis 42 mg KOH/g, in einem NCO/OH-Verhältnis von mindestens 4/1 und nachfolgender Entfernung eines Grossteils des nicht umgesetzten monomeren Diisocyanats.

Ein weiteres besonders bevorzugtes verzweigtes Isocyanatgruppen-haltiges Polymer ist ein konventionell hergestelltes Polymer mit einem NCO-Gehalt im Bereich von 1.2 bis 2.5 Gewichts-%, erhalten aus der Umsetzung von mindestens einem monomeren Diisocyanat mit mindestens einem Polyoxypropylen-Triol und gegebenenfalls mindestens einem Polyoxypropylen-Diol, wobei das Triol und das Diol gegebenenfalls Anteile von 1,2-Ethylenoxy-Gruppen enthalten, in einem NCO/OH-Verhältnis im Bereich von 1.5/1 bis 2.2/1. Dafür bevorzugte monomere Diisocyanate sind 4,4'-MDI, TDI oder IPDI.

Die feuchtigkeitshärtende Polyurethan-Zusammensetzung kann zusätzlich zum erfindungsgemässen Polymer mindestens ein weiteres lineares Isocyanatgruppen-haltiges Polymer enthalten. Dafür bevorzugt ist insbesondere ein Polymer mit einem NCO-Gehalt im Bereich von 1.6 bis 2.4 Gewichts-%, insbesondere 1.6 bis 2.1 Gewichts-%, und einem Gehalt an monomeren Diisocyanaten von höchstens 0.3 Gewichts-%, erhalten aus der Umsetzung von 4,4'-MDI mit einem gegebenenfalls Ethylenoxid-terminierten Polyoxypropylen-Diol mit einer OH-Zahl im Bereich von 23 bis 38 mg KOH/g, insbesondere 25 bis 32 mg KOH/g, in einem NCO/OH-Verhältnis von mindestens 4/1 und nachfolgender Entfernung eines Grossteils des nicht umgesetzten 4,4'-MDI, wie vorgängig beschrieben.

Bevorzugt enthält die feuchtigkeitshärtende Polyurethan-Zusammensetzung lineare Polymere und verzweigte Isocyanatgruppen-haltige Bestandteile in einem Gewichtsverhältnis im Bereich von 60/40 bis 99/1, bevorzugt 70/30 bis 98/2. In diesem Bereich besteht eine besonders attraktive Kombination aus vorteilhaften mechanischen Eigenschaften und guter Haftung auf Kunststoff-Substraten.

Für den Fall, dass die feuchtigkeitshärtende Polyurethan-Zusammensetzung mindestens ein oligomeres Diisocyanat enthält, liegt das Gewichtsverhältnis zwischen linearen Polymeren und oligomeren Diisocyanaten bevorzugt im Bereich von 90/10 bis 99.5/0.5, bevorzugt 95/5 bis 99/1, insbesondere 95/5 bis 98/2.

Für den Fall, dass die feuchtigkeitshärtende Polyurethan-Zusammensetzung mindestens ein verzweigtes Isocyanatgruppen-haltiges Polymer enthält, liegt das Gewichtsverhältnis zwischen linearen Polymeren und verzweigten Polymeren bevorzugt im Bereich von 60/40 bis 95/5, insbesondere 70/30 bis 90/10.

In einer Ausführungsform der Erfindung enthält die feuchtigkeitshärtende Polyurethan-Zusammensetzung zusätzlich mindestens ein blockiertes Amin.

Ein geeignetes blockiertes Amin weist bevorzugt mindestens eine Aldiminogruppe oder Oxazolidinogruppe auf. Bei Kontakt mit Feuchtigkeit reagiert es unter Hydrolyse und Freisetzung der Aminogruppe mit vorhandenen Isocyanatgruppen und kann eine schnelle, blasenfreie Aushärtung, eine besonders nichtklebrige Oberfläche und/oder besonders gute mechanische Eigenschaften begünstigen.

Bevorzugte Oxazolidine sind Bis-Oxazolidine, insbesondere solche abgeleitet von Isobutyraldehyd, Benzaldehyd oder substituiertem Benzaldehyd, insbesondere Benzaldehyd, welches in para-Stellung mit einer gegebenenfalls verzweigten Alkylgruppe mit 10 bis 14 C-Atomen substituiert ist.

Bevorzugt sind Bis-Oxazolidine aus der Umsetzung von OH-funktionellen Mono-Oxazolidinen mit Diisocyanaten, insbesondere 1,6-Hexamethylendiisocyanat. Geegnete Mono-Oxazolidine werden insbesondere erhalten aus der Umsetzung von Diethanolamin und einem Aldehyd unter Freisetzung und Entfernung von Wasser.

Geeignete Aldimine sind insbesondere Di- oder Trialdimine aus der Umsetzung von handelsüblichen primären Di- oder Triaminen mit Aldehyden, welche nicht enolisierbar sind. Dies sind Aldehyde, welche in alpha-Stellung zum Kohlenstoffatom der Aldehydgruppe kein Wasserstoffatom aufweisen.

Besonders bevorzugte blockierte Amine sind ausgewählt aus der Gruppe bestehend aus N,N'-Bis(2,2-dimethyl-3-lauroyloxypropyliden)hexylen-1,6-diamin, N,N'-Bis(2,2-dimethyl-3-acetoxypropyliden)-3-aminomethyl-3,5,5-trimethylcyclohexylamin, N,N'-Bis(2,2-dimethyl-3-lauroyloxypropyliden)-3-aminomethyl-3,5,5-trimethylcyclohexylamin, N,N'-Bis(benzyliden)-3-aminomethyl-3,5,5-trimethylcyclohexylamin, N,N'-Bis(4-C₁₀₋₁₄-alkylbenzyliden)-3-aminomethyl-3,5,5-trimethyl-cyclohexylamin,N,N'-Bis(2,2-dimethyl-3-acetoxypropyliden)polyoxypropylendiamin mit einem mittleren Molekulargewicht Mₙ im Bereich von 450 bis 750 g/mol, N,N'-Bis(2,2-dimethyl-3-lauroyloxypropyliden)polyoxypropylendiamin mit einem mittleren Molekulargewicht Mₙ im Bereich von 750 bis 1'050 g/mol, N,N'-Bis(benzyliden)poly-oxypropylendiamin mit einem mittleren Molekulargewicht Mₙ im Bereich von 380 bis 680 g/mol, N,N'-Bis(4-C₁₀₋₁₄-alkylbenzyliden)polyoxypropylendiamin mit einem mittleren Molekulargewicht Mₙ im Bereich von 680 bis 1'100 g/mol N,N',N"-Tris(2,2-dimethyl-3-acetoxypropyliden)polyoxypropylentriamin mit einem mittleren Molekulargewicht Mₙ im Bereich von 730 bis 880 g/mol und N,N',N"-Tris(2,2-dimethyl-3-lauroyloxypropyliden)polyoxypropylentriamin mit einem mittleren Molekulargewicht Mₙ im Bereich von 1'150 bis1'300 g/mol.

Bevorzugt enthält die feuchtigkeitshärtende Polyurethan-Zusammensetzung zusätzlich mindestens einen weiteren Bestandteil ausgewählt aus Katalysatoren, Füllstoffen, Weichmachern und Stabilisatoren.

Geeignete Katalysatoren sind Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Für den Fall, dass die feuchtigkeitshärtende Polyurethan-Zusammensetzung blockierte Amine enthält, sind geeignete Katalysatoren weiterhin Katalysatoren für die Hydrolyse der blockierten Aminogruppen, insbesondere organische Säuren, insbesondere aromatische Carbonsäuren wie Benzoesäure, 2-Nitrobenzoesäure oder Salicylsäure.

Geeignet sind insbesondere auch Kombinationen von verschiedenen Katalysatoren.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Bevorzugt sind Calciumcarbonate, welche gegebenenfalls mit Fettsäuren, insbesondere Stearaten, beschichtet sind, calcinierte Kaoline oder industriell hergestellte Russe.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexandicarboxylat oder hydriertes Diisononylterephthalat bzw. Diisononyl-1,4-cyclohexandicarboxylat, Isophthalate, Trimellitate, Adipate, insbesondere Dioctyladipat, Azelate, Sebacate, Benzoate, Glykolether, Glykolester, Weichmacher mit Polyetherstruktur, insbesondere Polypropylenoxid-monole, -diole oder -triole mit blockierten Hydroxylgruppen, insbesondere in der Form von Acetatgruppen, organische Phosphor- oder Sulfonsäureester, Polybutene, Polyisobutene oder von natürlichen Fetten oder Ölen abgeleitete Weichmacher, insbesondere epoxidiertes Soja- oder Leinöl. Bevorzugte Weichmacher sind Phthalate, hydrierte Phthalate, Adipate oder Weichmacher mit Polyetherstruktur.

Geeignete Stabilisatoren sind insbesondere Stabilisatoren gegen Oxidation, Wärme, Licht oder UV-Strahlung. Bevorzugt enthält die Zusammensetzung mindestens einen UV-Stabilisator.

Die feuchtigkeitshärtende Polyurethan-Zusammensetzung kann weitere Zusätze enthalten, insbesondere
- anorganische oder organische Pigmente, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- Trocknungsmittel, insbesondere Molekularsiebpulver, Calciumoxid, hochreaktive Isocyanate wie p-Tosylisocyanat, Mono-Oxazolidine wie Incozol^{®} 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- weitere Katalysatoren, welche die Reaktion der Isocyanatgruppen beschleunigen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert. Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylen-glykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid oder organische Phosphorsäureester;
- Additive, insbesondere Netzmittel, Verlaufmittel, Entschäumer, Entlüfter oder Biozide;
oder weitere üblicherweise in feuchtigkeitshärtenden Polyurethan-Zusammensetzungen eingesetzte Substanzen.

Es kann sinnvoll sein, gewisse Substanzen vor dem Einmischen in die Zusammensetzung chemisch oder physikalisch zu trocknen.

Beim Vermischen des erfindungsgemässen Isocyanatgruppen-haltigen Polymers mit weiteren Bestandteilen der Zusammensetzung, insbesondere Füllstoffen, wird der Gehalt an monomeren Diisocyanaten durch Reaktion mit vorhandener Feuchtigkeit gegebenenfalls weiter reduziert.

Bevorzugt enthält die feuchtigkeitshärtende Polyurethan-Zusammensetzung
- 30 bis 70 Gewichts-% Isocyanatgruppen-haltige Polymere, wovon 10 bis 70 Gewichts-% erfindungsgemässes Polymer,
- 20 bis 60 Gewichts-% Füllstoffe,
- 0 bis 25 Gewichts-%, insbesondere 0 bis 10 Gewichts-%, Weichmacher, und gegebenenfalls weitere Bestandteile, insbesondere oligomere Diisocyanate, blockierte Amine oder Katalysatoren.

Die feuchtigkeitshärtende Polyurethan-Zusammensetzung verfügt nach der Aushärtung über eine hohe Festigkeit bei hoher Dehnbarkeit.

Bevorzugt liegt die Zugfestigkeit, bestimmt wie in den Beispielen beschrieben, bei mindestens 1.5 MPa, besonders bevorzugt mindestens 2 MPa, insbesondere mindestens 2.5 MPa.

Bevorzugt liegt das Elastizitätsmodul im Bereich von 0.05 bis 5% Dehnung, bestimmt wie in den Beispielen beschrieben, im Bereich von 2 bis 20 MPa, insbesondere 3 bis 15 MPa.

Bevorzugt liegt die Bruchdehnung, bestimmt wie in den Beispielen beschrieben, bei mindestens 300%, insbesondere mindestens 500 %.

Die feuchtigkeitshärtende Polyurethan-Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und stellt insbesondere ein Fass, ein Container, ein Hobbock, ein Eimer, ein Kanister, eine Büchse, ein Beutel, ein Schlauchbeutel, eine Kartusche oder eine Tube dar.

Die feuchtigkeitshärtende Polyurethan-Zusammensetzung kann in Form einer einkomponentigen oder in Form einer mehrkomponentigen, insbesondere zweikomponentigen, Zusammensetzung vorliegen.

Als "einkomponentig" wird eine Zusammensetzung bezeichnet, bei welcher alle Bestandteile der Zusammensetzung im gleichen Gebinde vorliegen und welche als solche lagerstabil ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die feuchtigkeitshärtende Polyurethan-Zusammensetzung ist bevorzugt einkomponentig. Sie ist bei geeigneter Verpackung und Aufbewahrung lagerstabil, typischerweise während mehreren Monaten bis zu einem Jahr oder länger.

Bei der Applikation der feuchtigkeitshärtenden Polyurethan-Zusammensetzung beginnt der Prozess der Aushärtung. Als Ergebnis davon entsteht die ausgehärtete Zusammensetzung.

Im Fall einer einkomponentigen Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator und/oder einen Härter enthält oder freisetzt, zugemischt werden, oder die Zusammensetzung kann nach ihrer Applikation mit einer solchen Beschleuniger-Komponente in Kontakt gebracht werden.

Bei der Aushärtung reagieren die Isocyanatgruppen unter dem Einfluss von Feuchtigkeit untereinander. Für den Fall, dass die feuchtigkeitshärtende Polyurethan-Zusammensetzung ein blockiertes Amin enthält, reagieren die Isocyanatgruppen zudem mit den hydrolysierenden blockierten Aminogruppen. Die Gesamtheit dieser zur Aushärtung der Zusammensetzung führenden Reaktionen der Isocyanatgruppen wird auch als Vernetzung bezeichnet.

Die zur Aushärtung der feuchtigkeitshärtenden Polyurethan-Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung ("Haut"). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die feuchtigkeitshärtende Polyurethan-Zusammensetzung wird bevorzugt bei Umgebungstemperatur appliziert, insbesondere im Bereich von etwa -10 bis 50°C, bevorzugt im Bereich von -5 bis 45°C, insbesondere 0 bis 40°C.

Die Aushärtung der feuchtigkeitshärtenden Polyurethan-Zusammensetzung erfolgt bevorzugt ebenfalls bei Umgebungstemperatur.

Die feuchtigkeitshärtende Polyurethan-Zusammensetzung verfügt über eine lange Verarbeitungszeit (Offenzeit) und eine schnelle Aushärtung.

Enthält die feuchtigkeitshärtende Polyurethan-Zusammensetzung ein blockiertes Amin, wird bei der Vernetzung der für die Blockierung der Aminogruppen verwendete Aldehyd freigesetzt. Für den Fall, dass dieser weitgehend unflüchtig ist, verbleibt er zum grössten Teil in der ausgehärteten Zusammensetzung und wirkt als Weichmacher.

Bevorzugt wird die feuchtigkeitshärtende Polyurethan-Zusammensetzung verwendet als elastischer Klebstoff oder elastischer Dichtstoff oder elastische Beschichtung.

Als Klebstoff und/oder Dichtstoff ist die feuchtigkeitshärtende Polyurethan-Zusammensetzung insbesondere geeignet für Klebe- und Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile an die lackierte Karosserie eines Fahrzeugs, oder das Einkleben von Scheiben in die Karosserie, wobei die Fahrzeuge insbesondere Automobile, Lastkraftwagen, Busse, Schienenfahrzeuge oder Schiffe darstellen. Als Dichtstoff ist die feuchtigkeitshärtende Polyurethan-Zusammensetzung insbesondere geeignet für das elastische Abdichten von Fugen, Nähten oder Hohlräumen aller Art, insbesondere von Fugen am Bau wie Dilatationsfugen oder Anschlussfugen zwischen Bauteilen, insbesondere Bauteilen aus Kunststoff. oder von Bodenfugen im Tiefbau. Insbesondere für das Abdichten von Dilatationsfugen an Bauwerken ist ein Dichtstoff mit weichelastischen Eigenschaften und hoher Kälteflexibilität besonders geeignet.

Als Beschichtung ist die feuchtigkeitshärtende Polyurethan-Zusammensetzung insbesondere geeignet zum Schutz und/oder zum Abdichten von Bauwerken oder Teilen davon, insbesondere im Bereich von Materialien aus Kunststoff insbesondere für Balkone, Terrassen, Dächer, insbesondere Flachdächer oder schwach geneigte Dachfläche oder Dachgärten, oder im Innern von Gebäuden unter Fliesen oder Keramikplatten in Nasszellen oder Küchen, oder in Auffangwannen, Kanälen, Schächten, Silos, Tanks oder Abwasserbehandlungsanlagen.

Sie kann auch zu Reparaturzwecken als Abdichtung oder Beschichtung verwendet werden, beispielsweise von undichten Dachmembranen oder nicht mehr tauglichen Bodenbelägen oder als Reparaturmasse für hochreaktive Spritzabdichtungen.

Die feuchtigkeitshärtende Polyurethan-Zusammensetzung kann so formuliert sein, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, beispielsweise in Form einer Raupe, wobei diese eine im Wesentlichen runde oder dreieckige Querschnittsfläche aufweisen kann.

Die feuchtigkeitshärtende Polyurethan-Zusammensetzung kann weiterhin so formuliert sein, dass sie flüssig und sogenannt selbstverlaufend oder nur leicht thixotrop ist und zur Applikation ausgegossen werden kann. Als Beschichtung kann sie beispielsweise anschliessend flächig bis zur erwünschten Schichtdicke verteilt werden, beispielsweise mittels einer Rolle, einem Schieber, einer Zahntraufel oder einer Spachtel. Dabei wird in einem Arbeitsgang typischerweise eine Schichtdicke im Bereich von 0.5 bis 3 mm, insbesondere 1 bis 2.5 mm, aufgetragen.

Bevorzugt wird die feuchtigkeitshärtende Polyurethan-Zusammensetzung verwendet als elastischer Klebstoff oder elastischer Dichtstoff oder elastische Beschichtung zum Verkleben, Abdichten oder Beschichten von mindestens einem Kunststoff-Substrat.

Geeignete Kunststoff-Substrate sind insbesondere Hart- und Weich-PVC, Polycarbonat, Polystyrol, Polyester, Polyamid, PMMA, ABS, SAN, Epoxidharze, Phenolharze, PUR, POM, TPO, PE, PP, EPM, EPDM oder Blends von Polycarbonat und weiteren Kunstostoffen wie insbesondere ABS und/oder SAN, wobei diese Kunststoffe jeweils unbehandelt oder oberflächenbehandelt, beispielsweise mittels Plasma, Corona oder Flammen, vorliegen können, sowie faserverstärkte Kunststoffe wie insbesondere Kohlefaser-verstärkte Kunststoffe (CFK), Glasfaser-verstärkte Kunststoffe (GFK) oder Sheet Moulding Compounds (SMC).

Bevorzugt ist das Kunststoff-Substrat ausgewählt aus der Gruppe bestehend aus Hart-PVC, Weich-PVC, Polycarbonat, Polystyrol, Polyester, Polyamid, PMMA, ABS, SAN, Epoxidharze, Phenolharze, PUR, POM, TPO, PE, PP, EPM, EPDM und Blends von Polycarbonat mit weiteren Kunststoffen wie insbesondere ABS, und/oder SAN.

Davon bevorzugt sind Hart-PVC, Polycarbonat, Blends von Polycarbonat mit ABS und/oder SAN, PMMA oder ABS, insbesondere Polycarbonat oder Blends von Polycarbonat. Diese Kunststoffe sind besonders kritisch in Bezug auf gute Haftung ohne aufwändige Vorbehandlung und sollen besonders oft verklebt werden.

Geeignete weitere Substrate, welche mit der feuchtigkeitshärtenden Polyurethan-Zusammensetzung verklebt oder abgedichtet oder beschichtet werden können, sind insbesondere
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke;
- Glas, Glaskeramik, Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Isolierschäume, insbesondere aus EPS, XPS, PUR, PIR, Steinwolle, Glaswolle oder geschäumtem Glas (Foamglas).

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Die feuchtigkeitshärtende Polyurethan-Zusammensetzung wird bevorzugt eingesetzt in einem Verfahren zum Verkleben oder Abdichten, umfassend die Schritte (i) Applizieren der beschriebenen feuchtigkeitshärtenden Polyurethan-Zusammensetzung
- auf ein erstes Substrat und Kontaktieren der Zusammensetzung mit einem zweiten Substrat innerhalb der Offenzeit der Zusammensetzung, oder
- auf ein erstes und auf ein zweites Substrat und Fügen der beiden Substrate innerhalb der Offenzeit der Zusammensetzung, oder
- zwischen zwei Substrate,
   (ii) Aushärten der Zusammensetzung durch Kontakt mit Feuchtigkeit.

Die feuchtigkeitshärtende Polyurethan-Zusammensetzung wird weiterhin bevorzugt eingesetzt Verfahren zum Beschichten oder Abdichten, umfassend die Schritte
(i) Applizieren der beschriebenen feuchtigkeitshärtenden Polyurethan-Zusammensetzung auf ein Substrat,
(ii) Aushärten der Zusammensetzung durch Kontakt mit Feuchtigkeit.

In diesen Verfahren ist bevorzugt mindestens eines der Substrate ein Kunststoff-Substrat, wie vorgängig beschrieben.

Aus der Applikation und Aushärtung der feuchtigkeitshärtenden Polyurethan-Zusammensetzung wird ein Artikel erhalten, welcher mit der Zusammensetzung verklebt oder abgedichtet oder beschichtet ist. Dieser Artikel kann ein Bauwerk oder ein Teil davon sein, insbesondere ein Bauwerk des Hoch- oder Tiefbaus, ein Dach, ein Treppenhaus oder eine Fassade, oder er kann ein industrielles Gut oder ein Konsumgut sein, insbesondere ein Fenster, eine Lampe, eine Verkehrsampel, eine Haushaltmaschine oder ein Transportmittel wie insbesondere ein Automobil, ein Bus, ein Caravan, ein Lastkraftwagen, ein Schienenfahrzeug, ein Schiff, ein Flugzeug oder ein Helikopter, oder ein Anbauteil davon, beispielsweise ein Fenster aus organischem Glas, ein Panoramadach oder ein Lampengehäuse.

Ein weiterer Gegenstand der Erfindung ist die ausgehärtete Zusammensetzung, erhalten aus der feuchtigkeitshärtenden Polyurethan-Zusammensetzung nach deren Kontakt mit Feuchtigkeit.

Ein weiterer Gegenstand der Erfindung ist ein Haftverbund, umfassend mindestens ein Kunststoff-Substrat und die durch Kontakt mit Feuchtigkeit ausgehärtete Zusammensetzung, wie vorgängig beschrieben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich.

Die **Viskosität** wurde mit einem thermostatisierten Kegel-Platten-Viskosimeter Rheotec RC30 (Kegeldurchmesser 25 mm, Kegelwinkel 1°, Kegelspitze-PlattenAbstand 0.05 mm, Scherrate 10 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgäniger Derivatisierung mittels N-Propyl-4-nitrobenzylamin bestimmt.

### verwendete Polyole:

| | |
|---|---|
| Acclaim^{®} 4200: | Polyoxypropylen-Diol, OH-Zahl 28 mg KOH/g (von Covestro) |
| Acclaim^{®} 8200N: | Polyoxypropylen-Diol, OH-Zahl 14 mg KOH/g (von Covestro) |
| Acclaim^{®} 12200N: | Polyoxypropylen-Diol, OH-Zahl 10 mg KOH/g (von Covestro) |
| Desmophen^{®} 5031 BT: | Ethylenoxid-terminiertes Polyoxypropylen-Triol, OH-Zahl 28 mg KOH/g (von Covestro) |

### verwendete monomere Diisocyanate:

| | |
|---|---|
| Desmodur^{®} 44 MC L: | 4,4'-Diphenylmethandiisocyanat mit einem NCO-Gehalt von 33.6 Gewichts-% (von Covestro) |

### Herstellung von Isocyanatgruppen-haltigen Polymeren:

### Polymer L1 (linear):

757.7 g (0.19 eq OH) Acclaim^{®} 8200N und 242.3 g (1.9 eq NCO) Desmodur^{®} 44 MC L wurden nach bekanntem Verfahren bei 80 °C zu einem Polymer mit einem NCO-Gehalt von 7.2 Gewichts-%, einer Viskosität von 6.8 Pa s bei 20 °C und einem Gehalt an monomerem 4,4'-Diphenylmethandiisocyanat von ca. 20 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene lineare Polymer wies einen NCO-Gehalt von 1.0 Gewichts-%, eine Viskosität von 25.0 Pa s bei 20 °C und einen Gehalt an monomerem 4,4'-Diphenylmethandiisocyanat von 0.06 Gewichts-% auf.

### Polymer L2 (linear):

812.0 g (0.15 eq OH) Acclaim^{®} 12200N und 188.0 g (1.5 eq NCO) Desmodur^{®} 44 MC L wurden nach bekanntem Verfahren bei 80 °C zu einem Polymer mit einem NCO-Gehalt von 5.6 Gewichts-%, einer Viskosität von 13.9 Pa s bei 20°C und einem Gehalt an monomerem 4,4'-Diphenylmethandiisocyanat von ca. 14 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene lineare Polymer wies einen NCO-Gehalt von 0.7 Gewichts-%, eine Viskosität von 29.4 Pa s bei 20°C und einen Gehalt an monomerem 4,4'-Diphenylmethandiisocyanat von 0.04 Gewichts-% auf.

### Polymer Ref-1 (linear, Vergleich):

727.0 g Acclaim^{®} 4200 und 273.0 g Desmodur^{®} 44 MC L wurden nach bekanntem Verfahren bei 80 °C zu einem Polymer mit einem NCO-Gehalt von 7.4 Gewichts-%, einer Viskosität von 5.2 Pa s bei 20°C und einem Gehalt an monomerem 4,4'-Diphenylmethandiisocyanat von ca. 17 Gewichts-% umgesetzt.

Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene lineare Polymer wies einen NCO-Gehalt von 1.8 Gewichts-%, eine Viskosität von 13.3 Pa s bei 20°C und einen Gehalt an monomerem 4,4'-Diphenylmethandiisocyanat von 0.08 Gewichts-% auf.

### Polymer C-1 (verzweigt):

725.0 g Desmophen^{®} 5031 BT und 275 g Desmodur^{®} 44 MC L wurden nach bekanntem Verfahren bei 80 °C zu einem Polymer mit einem NCO-Gehalt von 7.6 Gewichts-%, einer Viskosität von 6.5 Pa s bei 20 °C und einem Gehalt an monomerem 4,4'-Diphenylmethandiisocyanat von ca. 20 Gewichts-% umgesetzt. Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polymer wies einen NCO-Gehalt von 1.7 Gewichts-%, eine Viskosität von 19 Pa s bei 20°C und einen Gehalt an monomerem 4,4'-Diphenylmethandiisocyanat von 0.04 Gewichts-% auf.

### Feuchtigkeitshärtende Polyurethan-Zusammensetzungen:

### Zusammensetzungen Z1 bis Z7:

Für jede Zusammensetzung wurden die in Tabelle 1 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt und unter Feuchtigkeitsausschluss aufbewahrt. Jede Zusammensetzung wurde folgendermassen geprüft:
Die **Shore A** Härte wurde bestimmt nach DIN 53505 an während 14 Tagen im Normklima ausgehärteten Prüfkörpern.

Zur Bestimmung der mechanischen Eigenschaften wurde die Zusammensetzung auf einem silikonbeschichteten Trennpapier zu einem Film von 2 mm Dicke aufgebracht, dieser während 14 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul 5%** (bei 0.5-5% Dehnung) geprüft.

Die **Haftung** auf Kunststoff-Substraten wurde bestimmt, indem die Zusammensetzung in Form von vier parallelen Raupen von ca. 10 mm Breite, 5 mm Höhe und 15 mm Länge auf das jeweilige Substrat appliziert und während 7 Tagen im Normklima ausgehärtet wurde. Anschliessend wurde die Haftung der ausgehärteten Zusammensetzung ein erstes Mal getestet, indem die erste Raupe am schmalen Ende knapp über der Klebefläche eingeschnitten, das eingeschnittene Ende der Raupe mit einer Rundzange festgehalten und versucht wurde, die Raupe vom Substrat wegzuziehen. Dann wurde die Raupe erneut bis auf das Substrat eingeschnitten, wobei der freigeschnittene Teil mit der Rundzange aufgerollt und wiederum versucht wurde, die Raupe vom Substrat wegzuziehen. So wurde die ganze Raupe ziehend vom Substrat weggeschnitten. Anschliessend wurde anhand des Bruchbildes die Haftung beurteilt und in der Tabelle 1 mit "**7d NK**" angegeben. Ein Teil der Prüfkörper wurde anschliessend während 7 Tagen untergetaucht in deionisiertem Wasser gelagert, dann während 2 Stunden im Normklima aufbewahrt und dann die zweite Raupe mit der Rundzange ziehend vom Substrat weggeschnitten und anhand des Bruchbildes die Haftung beurteilt und in der Tabelle 1 mit "**7d H₂O**" angegeben. Dann wurden die Prüfkörper während 24 Stunden in einem Umluftofen bei 80°C gelagert, gefolgt von 2 Stunden im Normklima, und dann die dritte Raupe wie beschrieben auf Haftung geprüft, anhand des Bruchbildes die Haftung beurteilt und in der Tabelle 1 mit "**1d 80°C**" angegeben. Schliesslich wurden die Prüfkörper während 7 Tagen bei 70°C und 100% relativer Feuchtigkeit aufbewahrt, gefolgt von 2 Stunden im Normklima, und die vierte Raupe wie beschrieben auf Haftung geprüft, anhand des Bruchbildes die Haftung beurteilt und in der Tabelle 1 mit "**7d 70°C/100%rF**" angegeben.

Als Kunststoff-Substrate wurden die folgenden Kunststoffplatten (300x200 x2mm) eingesetzt:
**PMMA**: Plexiglas^{®} XT 0A000 (von Evonik Röhm)
**PC**: Makrolon^{®} GP clear 099 (unbeschichtetes Polycarbonat, von Covestro)
**ABS**: Metzoplast ABS/G (von Metzeler Plastics GmbH)
**PVC**: KömaDur^{®} ES (von Kömmerling Kunststoffe)

Die Haftung wurde nach folgender Skala beurteilt:
100 steht für mehr als 95% Kohäsionsbruch und bedeutet eine sehr gute Haftung.
..40 steht für 40% Kohäsionsbruch und bedeutet eine mittelmässige Haftung.
5 steht für 5% Kohäsionsbruch und bedeutet eine ungenügende Haftung.
0 steht für 0% Kohäsionsbruch (100% Adhäsionsbruch) und bedeutet eine schlechte Haftung.

Die Resultate sind in der Tabellen 1 angegeben.

Vergleichsbeispiele sind mit **(Ref.)** gekennzeichnet.

**Tabelle 1: Zusammensetzung (in Gewichtsteilen) und Eigenschaften von Z1 bis Z7.**

| **Zusammensetzung** | **Z1 (Ref.)** | **Z2** | **Z3** | **Z4** | **Z5** | **Z6** | **Z7** |
|---|---|---|---|---|---|---|---|
| **Polymer Ref-1** | 41.4 | - | - | | - | - | - |
| **Polymer L1** | - | 41.4 | 47.4 | 49.4 | - | - | - |
| **Polymer L2** | - | - | - | - | 41.4 | 47.4 | 49.4 |
| **Polymer C-1** | 14.0 | 14.0 | 8.0 | 6.0 | 14.0 | 8.0 | 6.0 |
| pTSI¹ | 0.4 | 0.4 | 0.4 | 0.4 | 0.4 | 0.4 | 0.4 |
| Russ | 10.0 | 10.0 | 10.0 | 10.0 | 10.0 | 10.0 | 10.0 |
| Kreide² | 32.0 | 32.0 | 32.0 | 32.0 | 32.0 | 32.0 | 32.0 |
| Kieselsäure³ | 2.0 | 2.0 | 2.0 | 2.0 | 2.0 | 2.0 | 2.0 |
| DMDEE⁴ | 0.2 | 0.2 | 0.2 | 0.2 | 0.2 | 0.2 | 0.2 |
| Shore A | 44 | 49 | 45 | 45 | 49 | 44 | 40 |
| Zugfestigkeit [MPa] | 6.3 | 6.7 | 3.8 | 2.4 | 5.8 | 4.7 | 1.8 |
| Bruchdehnung [%] | 900 | 1040 | 1170 | 1135 | 950 | 1200 | 971 |
| E-Modul 5% [MPa] | 4.3 | 3.9 | 3.8 | 3.8 | 3.8 | 3.3 | 3.3 |

| Haftung **PMMA** | | | | | | | |
|---|---|---|---|---|---|---|---|
| 7d NK | 0 | 100 | 100 | 100 | 100 | 100 | 100 |
| 7d H₂O | 0 | 100 | 100 | 100 | 100 | 100 | 100 |
| 1d 80°C | 0 | 80 | 100 | 100 | 100 | 100 | 100 |
| 7d 70°C/100%rF | 0 | 100 | 100 | 100 | 100 | 100 | 100 |

| Haftung **PC** | | | | | | | |
|---|---|---|---|---|---|---|---|
| 7d NK | 100 | 100 | 100 | 100 | 100 | 100 | 100 |
| 7d H₂O | 100 | 100 | 100 | 100 | 100 | 100 | 100 |
| 1d 80°C | 100 | 100 | 100 | 100 | 100 | 100 | 100 |
| 7d 70°C/100%rF | 0 | 0 | 100 | 100 | 0 | 100 | 100 |

| Haftung **ABS** | | | | | | | |
|---|---|---|---|---|---|---|---|
| 7d NK | 0 | 0 | 5 | 100 | 0 | 100 | 100 |
| 7d H₂O | 0 | 0 | 5 | 100 | 0 | 100 | 100 |
| 1d 80°C | 0 | 0 | 5 | 100 | 0 | 100 | 100 |
| 7d 70°C/100%rF | 0 | 0 | 5 | 100 | 0 | 100 | 100 |

| Haftung **PVC** | | | | | | | |
|---|---|---|---|---|---|---|---|
| 7d NK | 0 | 0 | 5 | 100 | 0 | 100 | 100 |
| 7d H₂O | 0 | 0 | 5 | 100 | 0 | 100 | 100 |
| 1d 80°C | 0 | 0 | 40 | 100 | 0 | 100 | 100 |
| 7d 70°C/100%rF | 0 | 0 | 100 | 100 | 100 | 100 | 100 |

| | | | | | | | |
|---|---|---|---|---|---|---|---|
| ¹ p-Toluolsulfonylisocyanat ² Omyacarb^{®} 5 GU (von Omya) ³ Aerosil^{®} R 972 (von Evonik) ⁴ 2,2'-Dimorpholinodiethylether | | | | | | | |

## Patentansprüche

1. Lineares Isocyanatgruppen-haltiges Polymer mit einem NCO-Gehalt im Bereich von 0.3 bis 1.5 Gewichts-% und einem Gehalt an monomeren Diisocyanaten von höchstens 0.5 Gewichts-%, **dadurch gekennzeichnet, dass** es erhalten wird aus der Umsetzung von mindestens einem monomeren aromatischen Diisocyanat und einem Polyether-Diol mit einer OH-Zahl im Bereich von 5 bis 21 mg KOH/g in einem NCO/OH-Verhältnis von mindestens 5/1 und nachfolgender Entfernung eines Grossteils des monomeren aromatischen Diisocyanats mittels eines geeigneten Trennverfahrens.

2. Polymer gemäss Anspruch 1, **dadurch gekennzeichnet, dass** das monomere aromatische Diisocyanat 4,4'-Diphenylmethandiisocyanat ist.

3. Polymer gemäss einem der Ansprüche 1 bis 2, **dadurch gekennzeichnet, dass** das Polyether-Diol 80 bis 100 Gewichts-% 1,2-Propylenoxy-Gruppen und 0 bis 20 Gewichts-% 1,2-Ethylenoxy-Gruppen enthält.

4. Polymer gemäss einem der Ansprüche 1 bis 3, **dadurch gekennzeichnet, dass** das Polyether-Diol eine OH-Zahl im Bereich von 6 bis 19 mg KOH/g und eine mittlere OH-Funktionalität von mindestens 1.9 aufweist.

5. Polymer gemäss einem der Ansprüche 1 bis 4, **dadurch gekennzeichnet, dass** das überschüssige monomere Diisocyanat mittels eines destillativen Verfahrens entfernt wird.

6. Polymer gemäss einem der Ansprüche 1 bis 5, **dadurch gekennzeichnet, dass** es einen NCO-Gehalt im Bereich von 0.5 bis 1.3 Gewichts-% und einen Gehalt an monomeren Diisocyanaten von höchstens 0.3 Gewichts-% aufweist.

7. Polymer gemäss einem der Ansprüche 1 bis 6, **dadurch gekennzeichnet, dass** der NCO-Gehalt mindestens 90% des theoretischen NCO-Gehalts, welcher aus der Addition von einem mol monomerem Diisocyanat pro mol OH-Gruppen des Polyether-Diols berechnet wird, beträgt.

8. Feuchtigkeitshärtende Polyurethan-Zusammensetzung mit einem Gehalt an monomeren Diisocyanaten von weniger als 0.1 Gewichts-% enthaltend das Polymer gemäss einem der Ansprüche 1 bis 7.

9. Feuchtigkeitshärtende Polyurethan-Zusammensetzung gemäss Anspruch 8, **dadurch gekennzeichnet, dass** sie einen Gehalt an Polymer gemäss einem der Ansprüche 1 bis 7 bezogen auf die gesamte Zusammensetzung im Bereich von 5 bis 80 Gewichts-% aufweist.

10. Feuchtigkeitshärtende Polyurethan-Zusammensetzung gemäss einem der Ansprüche 8 bis 9, **dadurch gekennzeichnet, dass** sie einen Gehalt an Polymer gemäss einem der Ansprüche 1 bis 7 bezogen auf die gesamte Menge an Isocyanatgruppen-haltigen Polymeren in der Zusammensetzung von mindestens 25 Gewichts-% aufweist.

11. Feuchtigkeitshärtende Polyurethan-Zusammensetzung gemäss einem der Ansprüche 8 bis 10, **dadurch gekennzeichnet, dass** sie zusätzlich mindestens einen Isocyanatgruppen-haltigen Bestandteil mit einer mittleren NCO-Funktionalität von mehr als 2 enthält.

12. Verwendung der feuchtigkeitshärtenden Polyurethan-Zusammensetzung gemäss einem der Ansprüche 8 bis 11 als elastischer Klebstoff oder elastischer Dichtstoff oder elastische Beschichtung zum Verkleben, Abdichten oder Beschichten von mindestens einem Kunststoff-Substrat.

13. Verwendung gemäss Anspruch 12, **dadurch gekennzeichnet, dass** das Kunststoff-Substrat ausgewählt ist aus der Gruppe bestehend aus Hart-PVC, Weich-PVC, Polycarbonat, Polystyrol, Polyester, Polyamid, PMMA, ABS, SAN, Epoxidharze, Phenolharze, PUR, POM, TPO, PE, PP, EPM, EPDM und Blends von Polycarbonat mit weiteren Kunststoffen wie insbesondere ABS und/oder SAN.

14. Ausgehärtete Zusammensetzung, erhalten aus der feuchtigkeitshärtenden Polyurethan-Zusammensetzung gemäss einem der Ansprüche 8 bis 11 nach deren Kontakt mit Feuchtigkeit.

15. Haftverbund umfassend mindestens ein Kunststoff-Substrat und die durch Kontakt mit Feuchtigkeit ausgehärtete Polyurethan-Zusammensetzung gemäss einem der Ansprüche 8 bis 11.

## Claims

1. Linear polymer containing isocyanate groups and having an NCO content in the range from 0.3% to 1.5% by weight and a monomeric diisocyanate content of not more than 0.5% by weight, **characterized in that** it is obtained from the reaction of at least one monomeric aromatic diisocyanate and a polyether diol having an OH number in the range from 5 to 21 mg KOH/g in an NCO/OH ratio of at least 5/1 and subsequent removal of a majority of the monomeric aromatic diisocyanate by means of a suitable separation method.

2. Polymer according to Claim 1, **characterized in that** the monomeric aromatic diisocyanate is diphenylmethane 4,4'-diisocyanate.

3. Polymer according to either of Claims 1 and 2, **characterized in that** the polyether diol contains 80% to 100% by weight of 1,2-propyleneoxy groups and 0% to 20% by weight of 1,2-ethyleneoxy groups.

4. Polymer according to any of Claims 1 to 3, **characterized in that** the polyether diol has an OH number in the range from 6 to 19 mg KOH/g and an average OH functionality of at least 1.9.

5. Polymer according to any of Claims 1 to 4, **characterized in that** the excess monomeric diisocyanate is removed by means of a distillative method.

6. Polymer according to any of Claims 1 to 5, **characterized in that** it has an NCO content in the range from 0.5% to 1.3% by weight and a monomeric diisocyanate content of not more than 0.3% by weight.

7. Polymer according to any of Claims 1 to 6, **characterized in that** the NCO content is at least 90% of the theoretical NCO content which is calculated from the addition of one mole of monomeric diisocyanate per mole of OH groups of the polyether diol.

8. Moisture-curing polyurethane composition having a monomeric diisocyanate content of less than 0.1% by weight, comprising the polymer according to any of Claims 1 to 7.

9. Moisture-curing polyurethane composition according to Claim 8, **characterized in that** it has a content of polymer according to any of Claims 1 to 7, based on the overall composition, in the range from 5% to 80% by weight.

10. Moisture-curing polyurethane composition according to either of Claims 8 and 9, **characterized in that** it has a content of polymer according to any of Claims 1 to 7, based on the total amount of polymers containing isocyanate groups in the composition, of at least 25% by weight.

11. Moisture-curing polyurethane composition according to any of Claims 8 to 10, **characterized in that** it additionally comprises at least one constituent containing isocyanate groups and having an average NCO functionality of more than 2.

12. Use of the moisture-curing polyurethane composition according to any of Claims 8 to 11 as elastic adhesive or elastic sealant or elastic coating for bonding, sealing or coating of at least one plastic substrate.

13. Use according to Claim 12, **characterized in that** the plastic substrate is selected from the group consisting of rigid PVC, flexible PVC, polycarbonate, polystyrene, polyester, polyamide, PMMA, ABS, SAN, epoxy resins, phenolic resins, PUR, POM, TPO, PE, PP, EPM, EPDM, and blends of polycarbonate with further plastics such as, in particular, ABS and/or SAN.

14. Cured composition obtained from the moisture-curing polyurethane composition according to any of Claims 8 to 11 after contact thereof with moisture.

15. Bonded composite comprising at least one plastic substrate and the polyurethane composition according to any of Claims 8 to 11 that has been cured by contact with moisture.

## Revendications

1. Polymère linéaire contenant des groupes isocyanate, présentant une teneur en NCO dans la plage de 0,3 à 1,5% en poids et une teneur en diisocyanates monomères d'au plus 0,5% en poids, **caractérisé en ce qu'**il est obtenu par transformation d'au moins un diisocyanate aromatique monomère et d'un polyéther-diol présentant un indice d'OH dans la plage de 5 à 21 mg de KOH/g dans un rapport NCO/OH d'au moins 5/1 et élimination consécutive d'une grande partie du diisocyanate aromatique monomère au moyen d'un procédé de séparation approprié.

2. Polymère selon la revendication 1, **caractérisé en ce que** le diisocyanate aromatique monomère est le diisocyanate de 4,4'-diphénylméthane.

3. Polymère selon l'une des revendications 1 à 2, **caractérisé en ce que** le polyéther-diol contient 80 à 100% en poids de groupes 1,2-propylèneoxy et 0 à 20% en poids de groupes 1,2-éthylèneoxy.

4. Polymère selon l'une des revendications 1 à 3, **caractérisé en ce que** le polyéther-diol présente un indice d'OH dans la plage de 6 à 19 mg de KOH/g et une fonctionnalité OH moyenne d'au moins 1,9.

5. Polymère selon l'une des revendications 1 à 4, **caractérisé en ce que** le diisocyanate monomère en excès est éliminé au moyen d'un procédé de distillation.

6. Polymère selon l'une des revendications 1 à 5, **caractérisé en ce qu'**il présente une teneur en NCO dans la plage de 0,5 à 1,3% en poids et une teneur en diisocyanates monomères d'au plus 0,3% en poids.

7. Polymère selon l'une des revendications 1 à 6, **caractérisé en ce que** la teneur en NCO représente au moins 90% de la teneur théorique en NCO qui est calculée à partir de l'addition d'une mole de diisocyanate monomère par mole de groupes OH du polyéther-diol.

8. Composition de polyuréthane durcissant sous l'effet de l'humidité présentant une teneur en diisocyanates monomères inférieure à 0,1% en poids, contenant le polymère selon l'une des revendications 1 à 7.

9. Composition de polyuréthane durcissant sous l'effet de l'humidité selon la revendication 8, **caractérisée en ce qu'**elle présente une teneur en polymère selon l'une des revendications 1 à 7, par rapport à la composition totale, dans la plage de 5 à 80% en poids.

10. Composition de polyuréthane durcissant sous l'effet de l'humidité selon l'une quelconque des revendications 8 à 9, **caractérisée en ce qu'**elle présente une teneur en polymère selon l'une des revendications 1 à 7, par rapport à la quantité totale de polymères contenant des groupes isocyanate dans la composition, d'au moins 25% en poids.

11. Composition de polyuréthane durcissant sous l'effet de l'humidité selon l'une quelconque des revendications 8 à 10, **caractérisée en ce qu'**elle contient en outre au moins un constituant contenant des groupes isocyanate présentant une fonctionnalité NCO moyenne supérieure à 2.

12. Utilisation de la composition de polyuréthane durcissant sous l'effet de l'humidité selon l'une des revendications 8 à 11 comme adhésif élastique ou substance d'étanchéité élastique ou revêtement élastique pour le collage, l'étanchéification ou le revêtement d'au moins un substrat en matériau synthétique.

13. Utilisation selon la revendication 12, **caractérisée en ce que** le substrat en matériau synthétique est choisi dans le groupe constitué par le PVC dur, le PVC souple, le polycarbonate, le polystyrène, le polyester, le polyamide, le PMMA, l'ABS, le SAN, les résines époxyde, les résines phénoliques, le PUR, le POM, le TPO, le PE, le PP, l'EPM, l'EPDM et les mélanges de polycarbonate avec d'autres matériaux synthétiques tels qu'en particulier l'ABS et/ou le SAN.

14. Composition durcie obtenue à partir de la composition de polyuréthane durcissant sous l'effet de l'humidité selon l'une des revendications 8 à 11 après son contact avec de l'humidité.

15. Composite d'adhérence comprenant au moins un substrat en matériau synthétique et la composition de polyuréthane selon l'une des revendications 8 à 11 durcie par contact avec humidité.
